# EUROPÄISCHE PATENTSCHRIFT

(11) **EP 2 781 179 B1**
(45) Veröffentlichungstag und Bekanntmachung des Hinweises auf die Patenterteilung: **18.12.2019**
(21) Anmeldenummer: 14158701.4
(22) Anmeldetag: 11.03.2014
(51) Int. Cl.: A47L 9/28, H02P 7/24

(54) **Verfahren zum Einstellen der Leistung eines Staubsaugergebläses, Regelungseinrichtung zur Umsetzung des Verfahrens und Staubsauger mit einer solchen Regelungseinrichtung**
Method for adjusting the power of a vacuum cleaner fan, regulating device for implementing the method and vacuum cleaner with such a regulating device
Procédé de réglage de la puissance d'un ventilateur d'aspirateur, dispositif de régulation pour la mise en oeuvre du procédé et aspirateur doté d'un tel dispositif de régulation

(30) Priorität: 20.03.2013 DE 102013102847
(43) Veröffentlichungstag der Anmeldung: 24.09.2014
(73) Patentinhaber: Miele & Cie. KG, 33332 Gütersloh (DE)
(72) Erfinder: Braun, Otto, 33739 Bielefeld (DE)

(56) Entgegenhaltungen:
- DE-A1- 4 433 181
- DE-A1-102004 062 536
- DE-A1-102007 036 170
- JP-A- H0 556 898

## Beschreibung

Die Erfindung betrifft zunächst ein Verfahren zum Einstellen der Leistung eines Staubsaugergebläses eines Staubsaugers. Bei dem Verfahren stellt eine von dem Staubsauger umfasste elektronische Regelungseinrichtung die Gebläseleistung mittels einer geeigneten Stellgröße in Abhängigkeit eines vom Staubsaugergebläse erzeugten Unterdrucks als Regelgröße ein. Dabei wird der Unterdruck mittels eines Unterdruckschalters mit einem einzigen Schaltpunkt ermittelt. Die Erfindung betrifft sodann im Weiteren eine Regelungseinrichtung zur Umsetzung des Verfahrens.

Hochwertige Staubsauger erlauben eine automatische Regelung der Saugleistung. Hierdurch sollen einerseits die zum Bewegen der Bodendüse notwendigen Schiebekräfte gering gehalten und andererseits die Leistung an den zu reinigenden Bodenbelag angepasst werden. Dabei erfolgt die Regelung in Abhängigkeit von dem gemessenen Unterdruck als Regelgröße, der an einer charakteristischen Stelle, wie zum Beispiel der Bodendüse oder dem Saugstutzen, gemessen wird. Zur Erfassung des Unterdrucks kommen als Sensoren Unterdrucksensoren mit analoger Ausgabe, Unterdruckschalter mit zwei Schaltpunkten oder Unterdruckschalter mit einem einzigen Schaltpunkt in Betracht. Zur Anpassung der Gebläseleistung wird beispielsweise eine Phasenanschnittsteuerung verwendet. Als Stellgröße wird dann ein Phasenwinkel verwendet. Die Auswertung der Sensorik und die Einstellung der Stellgröße sowie gegebenenfalls weitere Messungen erfolgen üblicherweise mit einem Mikrocontroller, im Folgenden allgemein als elektronische Regelungseinrichtung bezeichnet.

Unterdrucksensoren mit analoger Ausgabe besitzen den Vorteil, dass sie eine exakte Messung der Sollwertabweichung zu jeder Zeit ermöglichen. Dementsprechend ermöglichen sie das beste Regelverhalten. Sie sind zudem schnell und genau. Diesem Vorteil steht der vergleichsweise hohe Preis eines solchen analogen Unterdrucksensors entgegen. Unterdruckschalter mit zwei Schaltpunkten (oder alternativ zwei Unterdruckschalter mit unterschiedlichen Schaltpunkten) stellen eine kostengünstigere Variante dar: Der Sollwert der Regelgröße liegt zwischen den beiden Schaltpunkten (Unterdruckwerten) und die Gebläseleistung kann durch gezielte Änderung sicher in den gewünschten Zielbereich gefahren werden. Die eingestellte Leistung schwankt so im Sollwertbereich zwischen den zwei Schaltpunkten. Eine nochmals kostengünstigere Variante bestünde darin, nur einen Unterdruckschalter zu verwenden.

Die ältere, nicht vorveröffentliche, europäische Patentanmeldung der Anmelderin umfasst einen Lösungsvorschlag, bei dem zum Einstellen der Leistung eines Staubsaugergebläses nur ein Unterdruckschalter mit einem einzigen Schaltpunkt verwendet wird. Dort ist vorgesehen, dass die Regelungseinrichtung des Staubsaugers in einer ersten Betriebsphase anhand des Schaltpunkts des Unterdruckschalters charakteristische Parameter zur Bestimmung eines Arbeitspunkts des Staubsaugergebläses ermittelt. In der ersten Betriebsphase wird eine Stellgröße für die Gebläseleistung so eingestellt, dass sich möglichst schnell ein Schaltwechsel des Unterdruckschalters ergibt. Aus der bis zu diesem Schaltwechsel verstrichenen Zeit und der Gebläseleistung beim Schaltwechsel, genauer einer Differenz aus einer Maximalleistung und der Gebläseleistung beim Schaltwechsel, ergeben sich die charakteristischen Parameter zur Bestimmung des Arbeitspunkts des Staubsaugergebläses. Dieser Arbeitspunkt wird unter Kontrolle der Regelungseinrichtung mittels einer Vorgabe einer entsprechenden Stellgröße angefahren. Anschließend wird die Stellgröße nur noch langsam geändert. Dabei wird die Stellgröße zum Beispiel stufenweise verringert, bis sich der Unterdruckschalter öffnet. Dann wird die Stellgröße stufenweise wieder erhöht, bis der Unterdruckschalter schließt, usw. Die durch die Stellgröße beeinflusste Gebläseleistung pendelt demzufolge mit geringer Frequenz um den Arbeitspunkt des Staubsaugergebläses.

Die JP H05 56898 A offenbart ein Verfahren zum Einstellen der Leistung eines Staubsaugergebläses bei dem eine elektronische Regelungseinrichtung die Gebläseleistung mittels einer geeigneten Stellgröße in Abhängigkeit eines vom Staubsaugergebläses erzeugten Unterdrucks als Regelgröße einstellt, wobei der Unterdruck über einen Unterdrucksensor ermittelt wird, wobei das Ausgangssignal des Unterdrucksensors tiefpassgefiltert wird.

Eine Aufgabe der Erfindung besteht darin, eine weitere Möglichkeit zum Einstellen der Leistung eines Staubsaugergebläses auf Basis eines Unterdruckschalters mit einem einzigen Schaltpunkt anzugeben, insbesondere ein Verfahren zum Einstellen der Leistung eines Staubsaugergebläses, das nicht auf einer iterativen Annäherung an den Schaltpunkt des Unterdruckschalters basiert.

Erfindungsgemäß wird diese Aufgabe durch ein Verfahren zum Einstellen der Leistung eines Staubsaugergebläses mit den Merkmalen des Patentanspruchs 1 gelöst. Dabei ist bei einem solchen Verfahren, bei dem eine elektronische Regelungseinrichtung die Gebläseleistung mittels einer geeigneten Stellgröße in Abhängigkeit eines vom Staubsaugergebläse erzeugten Unterdrucks als Regelgröße einstellt, wobei ein Maß für den Unterdruck mittels eines Unterdruckschalters mit einem einzigen Schaltpunkt ermittelt wird, vorgesehen, dass ein über dem Unterdruckschalter abgreifbares Signal gefiltert wird, insbesondere tiefpassgefiltert wird, und dass ein nach der Filterung resultierendes Signal als Maß für den Unterdruck und als Regelgröße zur Einstellung der Gebläseleistung verwendet wird.

Der Vorteil der hier vorgeschlagenen Lösung besteht vor allem darin, dass erkannt wurde, dass das bei einem Unterdruck in der Nähe des Schaltpunkts des Unterdruckschalters über dem Unterdruckschalter abgreifbare Signal und vor allem die Einschaltdauer der Impulse in dem Signal direkt proportional zur anliegenden Druckdifferenz und damit zum durch das Staubsaugergebläse erzeugten Unterdruck ist. Zur Erfassung der Unterdruckverhältnisse werden im zeitlichen Bereich der Umschaltung des Druckschalters die wechselnden Zustände des Schalters ausgewertet. Im Bereich des Schaltpunktes entsteht ein sogenanntes Prellen des Schalters, wodurch am Schalterausgang eine Folge von Impulsen mit einer Amplitude der Steuerspannung, beispielsweise 5 V, ausgegeben werden. Diese Impulse werden dann tiefpassgefiltert oder einer mittelwertbildenden Rechenoperation zugeführt, wodurch ein resultierendes Signal erzeugt wird, das dann als quasi analoges Istsignal der Regelung bzw. Einstellung der Gebläseleistung zugeführt wird. Anders ausgedrückt ist das abgreifbare Signal eine Folge von Impulsen, die beim Prellen des Unterdruckschalters während der Umschaltphase entstehen, wobei die Folge von Impulsen für einen vorbestimmten Zeitraum gefiltert werden zur Bestimmung des Istwertes als Maß für den erfassten Unterdruck.

Durch eine Filterung, insbesondere Tiefpassfilterung dieses Signals und eine resultierende Glättung des Signals ergibt sich ein unterdruckproportionales Signal, das zum Einstellen der Leistung eines Staubsaugergebläses verwendet werden kann. Durch die Generierung eines unterdruckproportionalen Signals wird der an sich nur ein rein digitales Ausgangssignal liefernde Unterdruckschalter wie ein analoger Unterdrucksensor verwendbar. Dies wird durch die Glättung des Ausgangssignals des Unterdruckschalters erreicht.

Damit ergibt sich nach dem hier vorgeschlagenen Ansatz eine Möglichkeit, in einer Regelung zum Einstellen der Leistung eines Staubsaugergebläses einen einfachen und kostengünstigen Unterdruckschalter im Wesentlichen genauso wie einen komplexen und vor allem teuren analogen Drucksensor verwenden zu können. Der Unterdruckschalter fungiert dann zusammen mit seiner Beschaltung wie ein analoger Drucksensor. Daher rechtfertigt sich auch die im Folgenden mitunter verwendete Bezeichnung des Unterdruckschalters zusammen mit seiner Beschaltung zur Filterung von dessen Ausgangssignal als Unterdrucksensor.

Im Vergleich zu bisherigen Lösungen mit einem Unterdruckschalter mit genau einem Schaltpunkt, die versuchen, einen Arbeitspunkt des Gebläses in der Nähe des Schaltpunkts zu halten, ergibt sich eine zuverlässigere Regelung ohne das bisher systembedingte Schwingen oder zumindest niederfrequente Pendeln um den Arbeitspunkt. Generell ist das hier vorgeschlagene Konzept für sämtliche Anwendungsfälle einsetzbar, bei denen bisher herkömmliche Drucksensoren eingesetzt wurden, die nur einen bestimmten Wert überwachten. Dort können gemäß dem hier beschriebenen Ansatz jetzt kostengünstige Unterdruckschalter eingesetzt werden.

Vorteilhafte Ausgestaltungen und Weiterbildungen der Erfindung ergeben sich aus den Unteransprüchen. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bezüglich der Vorrichtung wird die genannte Aufgabe erfindungsgemäß gelöst durch die Merkmale des parallelen Vorrichtungsanspruchs. Danach sind bei einer Regelungseinrichtung für einen Staubsauger, die zum Einstellen der Leistung eines Staubsaugergebläses bestimmt ist, Mittel zur Ausführung eines Verfahrens wie hier und im Folgenden beschrieben vorgesehen. Vorteilhafte Ausgestaltungen der Vorrichtung sind Gegenstand der anschließenden Unteransprüche oder ergeben sich aus einer Umsetzung einzelner oder mehrerer Merkmale des unabhängigen Verfahrensanspruchs und der darauf rückbezogenen Ansprüche.

Bei einer Ausführungsform des Verfahrens ist vorgesehen, dass der Regelungseinrichtung als Sollwert für die Regelung ein Wert zwischen einem Minimalwert des resultierenden Signals und einem Maximalwert des resultierenden Signals vorgegeben wird. Ein solcher Sollwert liegt jedenfalls in einem durch den Minimal- und den Maximalwert begrenzten Messbereich des mit dem Unterdruckschalter gebildeten Unterdrucksensors. Bei einer besonderen Ausführungsform des Verfahrens ist vorgesehen, dass als Sollwert für die Regelung ein Wert genau in der Mitte zwischen dem Minimalwert und dem Maximalwert verwendet wird. Bei der Regelung wird dann der Messbereich des mit dem Unterdruckschalter gebildeten Unterdrucksensors optimal ausgenutzt.

Bei einer weiteren Ausführungsform des Verfahrens werden oberhalb des Minimalwerts des resultierenden Signals des mit dem Unterdruckschalter gebildeten Unterdrucksensors und unterhalb des Maximalwerts des resultierenden Signals ein unterer bzw. ein oberer Schwellwert vorgegeben. Bei einem als Istwert zum Einstellen der Leistung eines Staubsaugergebläses aufgenommenen Momentanwert des Signals zwischen dem unteren und dem oberen Schwellwert wird ein Regler der Regelungseinrichtung aktiviert, der den jeweiligen Istwert in der Nähe des Sollwerts hält. Bei einem Istwert unterhalb des unteren Schwellwerts oder oberhalb des oberen Schwellwerts wird ein Regler aktiviert wird, der den Istwert zumindest wieder in einen Bereich zwischen den beiden Schwellwerten führt. Dabei kann es sich um ein und denselben Regler handeln, der in Abhängigkeit von einer jeweiligen Lage des Istwerts zum Beispiel mit unterschiedlichen Verstärkungsfaktoren beaufschlagt wird. Alternativ ist auch die Verwendung zumindest zweier Regler möglich, zwischen denen innerhalb der Regelungseinrichtung in Abhängigkeit von einer jeweiligen Lage des Istwerts umgeschaltet wird.

Zur Ausführung des Verfahrens ist eine zur Verwendung in einem Staubsauger bestimmte Regelungseinrichtung vorgesehen. Eine solche Regelungseinrichtung für einen Staubsauger, die zum Einstellen der Leistung eines Staubsaugergebläses des Staubsaugers bestimmt ist, umfasst Mittel, die eine Ausführung eines Verfahrens wie hier und im Folgenden beschrieben ermöglichen.

Als Mittel zur Ausführung des Verfahrens sind ein Unterdruckschalter mit einem einzigen Schaltpunkt und ein an den Unterdruckschalter anschließendes Filter vorgesehen. Das Filter schließt an den Unterdruckschalter an, indem es elektrisch parallel zu dem Unterdruckschalter angeschlossen ist und indem das Filter eine Filterung eines über dem Unterdruckschalter abgreifbaren Signals bewirkt.

Bei einer besonderen Ausführungsform der Regelungseinrichtung handelt es sich bei dem Filter um ein Tiefpassfilter. Wenn das Tiefpassfilter in Form eines RC-Glieds ausgeführt ist, ist eine besonders einfache, für den hier vorgestellten Anwendungsfall aber noch ausreichende Ausführungsform eines Tiefpassfilters gegeben. Ein solches Tiefpassfilter ist preiswert und die Filtereigenschaften lassen sich leicht festlegen und durch Verwendung eines verstellbaren Widerstands und/oder eine verstellbaren Kapazität auch beeinflussen.

Bei einer weiteren besonderen Ausführungsform der Regelungseinrichtung sind eine Mehrzahl von in Reihe geschalteten Unterdruckschaltern mit jeweils genau einem Schaltpunkt vorgesehen, wobei elektrisch parallel zu der Reihenschaltung der Unterdruckschalter ein Filter zur Filterung des über der Reihenschaltung der Unterdruckschalter abgreifbaren Signals angeordnet ist. Mit einer solchen Reihenschaltung mehrerer Unterdruckschalter lässt sich der Messbereich des so gebildeten Unterdrucksensors erweitern. Mit einer Erweiterung des Messbereichs geht ein vergrößerter Wertebereich einher, innerhalb dessen die Regelungseinrichtung durch Anpassung der Leistung des Staubsaugergebläses den resultierenden Unterdruck möglichst genau im Bereich des vorgegebenen Sollwerts halten kann.

Die Erfindung ist damit insgesamt auch ein Staubsauger mit Mitteln zur Ausführung eines Verfahrens wie hier und im Folgenden beschrieben. Als Mittel zur Ausführung eines solchen Verfahrens kommt eine Regelungseinrichtung mit den hier und im Folgenden beschriebenen Merkmalen in Betracht.

Im Ergebnis ist der hier vorgestellte Ansatz auch ein Vorschlag für eine neuartige Verwendungsmöglichkeit eines Unterdruckschalters, nämlich eine Verwendung eines Unterdruckschalters zusammen mit einer speziellen Beschaltung als Unterdrucksensor. Bei dem Unterdruckschalter handelt es sich um einen Unterdruckschalter mit einem einzigen Schaltpunkt. Die spezielle Beschaltung besteht darin, dass im Anschluss an den Unterdruckschalter und zur Filterung eines über dem Unterdruckschalter abgreifbaren Signals ein elektrisch parallel zu dem Unterdruckschalter geschaltetes Filter vorgesehen ist. Bei dem Filter handelt es sich zum Beispiel um ein Tiefpassfilter. Der so gebildete Unterdrucksensor gibt ein analoges Sensorsignal ab, das heißt dass im Betrieb eines solchen Unterdrucksensors bei diesem ein analoges Sensorsignal abgreifbar ist. Ein solcher Unterdrucksensor ist nach dem oben erwähnten Prinzip durch Verwendung einer Mehrzahl von Unterdruckschaltern mit jeweils unterschiedlichen Schaltpunkten zu einem Unterdrucksensor mit einem vergrößerten Messbereich erweiterbar. Anstelle mehrerer Unterdruckschalter mit jeweils einem Schaltpunkt kommen dann auch ein oder mehrere Unterdruckschalter mit mehreren Schaltpunkten in Betracht. Insoweit relativiert sich die hier und im Folgenden im Hinblick auf eine bessere Verständlichkeit der Beschreibung durchgängig formulierte Bedingung, dass ein Unterdruckschalter mit genau einem Schaltpunkt oder mindestens ein Unterdruckschalter mit genau einem Schaltpunkt verwendet wird. Bei mehr als einem Unterdruckschalter mit jeweils genau einem Schaltpunkt ist die Verwendung eines oder mehrerer Unterdruckschalter mit mehreren Schaltpunkten eine äquivalente Ausführungsform, die jedenfalls von der Spezifikation "mehrere Unterdruckschalter mit jeweils genau einem Schaltpunkt" umfasst sein soll.

Ein Ausführungsbeispiel der Erfindung ist in den Zeichnungen rein schematisch dargestellt und wird nachfolgend näher beschrieben. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung auch Abänderungen und Modifikationen möglich, die zum Beispiel durch Kombination oder Abwandlung von einzelnen in Verbindung mit den im allgemeinen oder speziellen Beschreibungsteil erläuterten sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Figur 1: einen Staubsauger mit einem Staubsaugergebläse und mit einer Regelungseinrichtung zur Einstellung einer Leistung des Staubsaugergebläses,
- Figur 2: eine erfindungsgemäße Beschaltung eines Unterdruckschalters mit einem Schaltpunkt, aufgrund derer der Unterdruckschalter als analoger Unterdrucksensor verwendbar wird,
- Figur 3: ein Beispiel für ein über einem Unterdruckschalter mit einem einzigen Schaltpunkt bei einem Unterdruck in der Nähe des Schaltpunkts abgreifbares Signal,
- Figur 4: ein Beispiel für ein am Ausgang der Schaltung in Figur 2 abgreifbares Signal,
- Figur 5: eine schematisch vereinfachte Darstellung eines am Ausgang der Schaltung in Figur 2 abgreifbaren Signals über einer jeweiligen Leistung des Staubsaugergebläses, mit einer Hervorhebung eines als Messbereich des Unterdrucksensors auffassbaren Abschnitts,
- Figur 6: das Signal wie in Figur 5 mit aufgrund des Signalverlaufs resultierenden unterschiedlichen Bereichen,
- Figur 7: eine Schaltung auf Basis des in Figur 2 gezeigten Prinzips mit einer Mehrzahl von Unterdruckschaltern mit jeweils genau einem Schaltpunkt und
- Figur 8: ein Signal ähnlich wie in Figur 5 mit mehreren aufgrund einer jeweiligen Mehrzahl von Unterdruckschaltern (Figur 7) resultierenden und aufeinander folgenden Messbereichen.

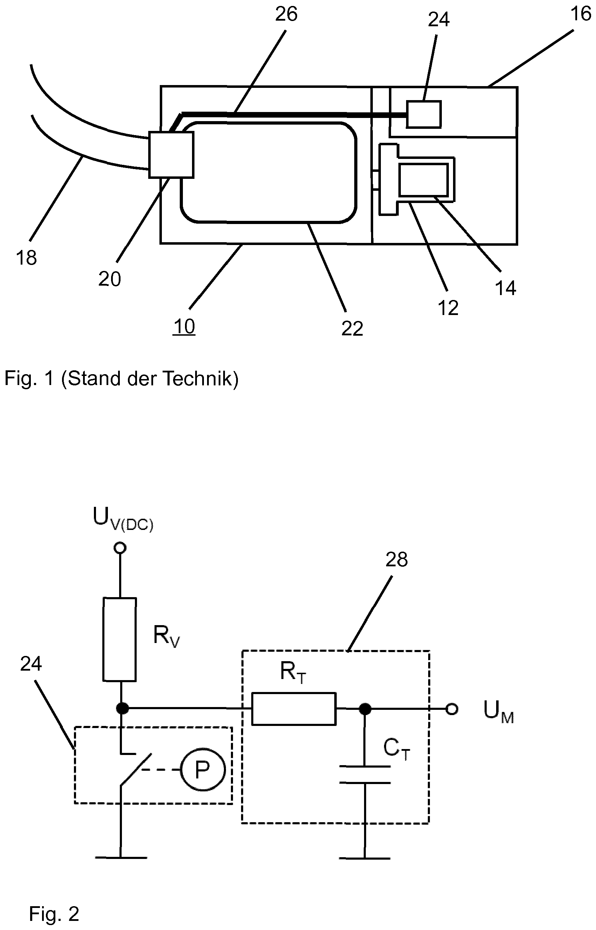

Die Darstellung in Figur 1 zeigt einen an sich bekannten Staubsauger 10, der lediglich mit seinen für die Erfindung wesentlichen Teilen als Blockschaltbild skizziert ist. Danach umfasst der Staubsauger 10 ein mitunter auch nur kurz als Gebläse bezeichnetes Staubsaugergebläse 12, das im Betrieb des Staubsaugers 10 den für den Saugvorgang benötigten Unterdruck erzeugt. Zur Einstellung der Gebläseleistung des Staubsaugergebläses 12 umfasst der Staubsauger in an sich bekannter Art einen steuerbaren Gebläsemotor 14. Zur Ansteuerung des Gebläsemotors 14 ist eine elektronische Regelungseinrichtung 16 des Staubsaugers 10 vorgesehen. Diese wirkt beispielsweise über einen Leistungshalbleiter mittels einer Phasenan- oder -abschnittsteuerung auf die Stromversorgung des Gebläsemotors 14. In diesem Fall ist der Phasenwinkel die Stellgröße der Regelungseinrichtung 16. Aufgrund des Staubsaugergebläses 12 und des davon erzeugten Unterdrucks ergibt sich beim Betrieb des Staubsaugers 10 ein Saugluftstrom, der in an sich bekannter Art von einer hier nicht dargestellten Bodendüse über einen Saugschlauch 18 und einen Saugstutzen 20, der zum Anschluss des Saugschlauchs 18 an das Gehäuse des Staubsaugers 10 bestimmt ist, in einen Staubbeutel 22 führt.

Als Regelgröße, mit der die Regelungseinrichtung 16 arbeitet, dient der vom Staubsaugergebläse 12 erzeugte Unterdruck. Zur Ermittlung eines Anhalts für den im Betrieb erzeugten Unterdruck ist ein Unterdruckschalter 24 vorgesehen. Bei dem verwendeten Unterdruckschalter handelt es sich um einen Unterdruckschalter 24, welcher nur einen einzigen Schaltpunkt besitzt. Der Unterdruckschalter 24 ist in Figur 1 als Element der Regelungseinrichtung 16 gezeigt und ist mit einem Unterdruckschlauch 26 an die Druckverhältnisse im Luftweg des Saugluftstroms gekoppelt. Bei der dargestellten Ausführungsform führt der Unterdruckschlauch 26 vom Saugstutzen 20 zum Unterdruckschalter 24, so dass der Unterdruckschalter 24 mittels des Unterdruckschlauchs 26 an die Druckverhältnisse im Saugstutzen 20 gekoppelt ist. Der Unterdruckschlauch 26 ist optional. Der Unterdruckschalter 24 kann räumlich auch direkt dem Saugstutzen 20 zugeordnet sein. Des Weiteren kann mittels eines Unterdruckschlauchs 26 oder einer entsprechenden räumlichen Anordnung des Unterdruckschalters 24 dieser auch an einer anderen Stelle des Luftwegs des Saugluftstroms an die dortigen Unterdruckverhältnisse gekoppelt sein. Auf den in Figur 1 beispielhaft gezeigten Ort des Unterdruckschalters 24 kommt es demnach nicht an.

Die Darstellung in Figur 2 zeigt ein Beispiel für die bei dem hier vorgestellten Ansatz vorgesehene Beschaltung des Unterdruckschalters 24. Demnach ist der Unterdruckschalter 24 mit einem Vorwiderstand R_{V} an eine Gleichspannungsquelle und die davon zur Verfügung gestellte Versorgungsspannung U_{V(DC)} angeschlossen. An einen Mittelabgriff zwischen dem Vorwiderstand R_{V} und dem Unterdruckschalter 24 schließt ein bei der dargestellten Ausführungsform als RC-Glied mit einem Tiefpasswiderstand R_{T} und einem Tiefpasskondensator C_{T} ausgeführtes Tiefpassfilter 28 an. Am Ausgang eines jeweiligen Filters, hier des Tiefpassfilters 28, ist eine geglättete Form des über dem Unterdruckschalter 24 abgreifbaren Signals abgreifbar. Der dort abgreifbare analoge Spannungsmesswert U_{M} ist ein Maß für den Unterdruck an derjenigen Stelle des Luftwegs des Saugluftstroms, an die der Unterdruckschalter 24 gekoppelt ist.

Ein einfacher Unterdruckschalter 24 umfasst eine flexible Membran, die mechanisch einen Schaltkontakt betätigt, eine einstellbare Rückstellfeder und ein Gehäuse mit einem oder mehreren Anschlüssen für Unterdruckschläuche 26 oder dergleichen. Ein Schaltpunkt eines solchen Unterdruckschalters 24 ist nicht kippend, sondern schleichend. Die Folge dieses Schleichens ist, dass es bei einem leicht schwankenden Druck in der Nähe des Schaltpunkts zu einem Prellen des Schaltkontakts kommt. Aufgrund dieses Prellens und des resultierenden, quasi unkontrollierten Schließens und Öffnens des Schaltkontakts entsteht eine Art PWM-Muster (PWM = Pulsweitenmodulation).

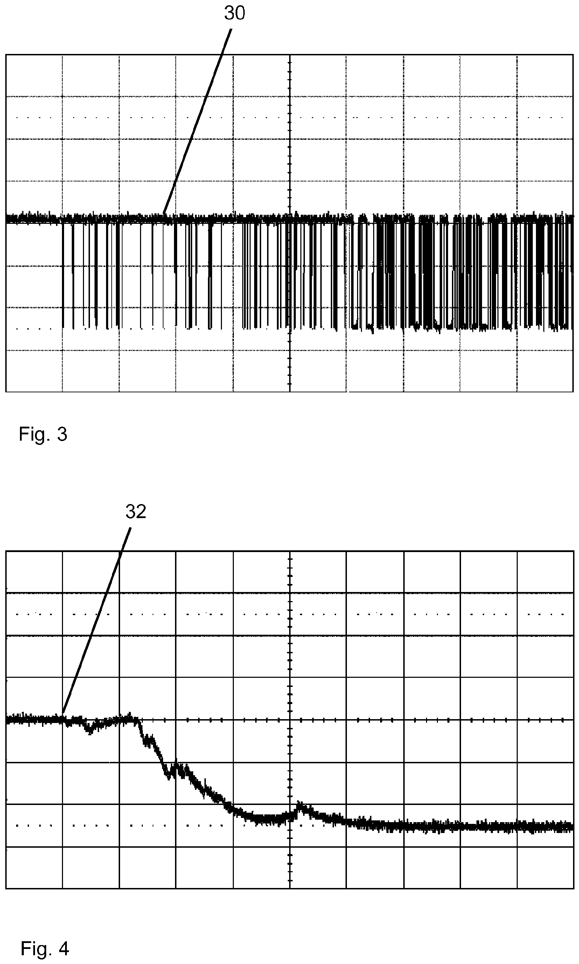

In Figur 3 ist ein Beispiel für ein solches mit einem Oszilloskop aufgenommenes Signal 30 gezeigt. Das Signal 30 gibt bei einer Beschaltung des Unterdruckschalters 24, wie sie exemplarisch in Figur 2 gezeigt ist, den Verlauf des Potentials am Mittelabgriff zwischen dem Unterdruckschalter 24 und dem Vorwiderstand R_{V} wieder. Auf der Abszisse ist die über dem Unterdruckschalter 24 abgreifbare Spannung abgetragen. Auf der Ordinate ist die Zeit abgetragen.

Das Signal 30 zeichnet sich dadurch aus, dass eine Dauer der einzelnen Impulse direkt proportional zur am Unterdruckschalter 24 anliegenden Druckdifferenz ist. Das Signalmuster ist dabei aber nicht gleichförmig, sondern gewissermaßen chaotisch. Durch eine Glättung des Signals 30 mit einem Filter, insbesondere einem Tiefpassfilter 28 (Figur 2), lässt sich aus diesen Schaltvorgängen ein analoges Signal 32 generieren. Ein Beispiel für ein solches Analogsignal 32 ist in Figur 4 gezeigt. Das Signal 32 in Figur 4 gibt bei einer Beschaltung des Unterdruckschalters 24, wie sie exemplarisch in Figur 2 gezeigt ist, den Verlauf des Potentials am Ausgang des Tiefpassfilters 28 wieder (U_{M}). Auf der Abszisse ist die am Ausgang des Tiefpassfilters 28 abgreifbare Spannung (U_{M}) abgetragen. Auf der Ordinate ist die Zeit abgetragen. Der Unterdruckschalter 24 wird durch eine Beschaltung, wie sie exemplarisch in Figur 2 gezeigt ist, zu einem Unterdrucksensor. Entsprechend wird das Signal (U_{M}) am Ausgang des Tiefpassfilters 28 auch als Sensorsignal 32 bezeichnet.

Es ist an dieser Stelle darauf hinzuweisen, dass die in Figur 3 und Figur 4 dargestellten Signalverläufe nicht zeitlich korreliert sind. Der Signalverlauf in Figur 4 ist also zwar das Ergebnis einer Glättung eines Signalverlaufs am Ausgang des Unterdruckschalters 24, so wie dies in Figur 3 gezeigt ist, aber nicht das Ergebnis einer Glättung von genau dem in Figur 3 gezeigten Signal 30, sondern eine Glättung eines zu einem anderen Zeitpunkt am Ausgang des Unterdruckschalters 24 abgegriffenen Signals.

Das nach der Glättung resultierende Sensorsignal 32 des Unterdruckschalters 24 kann als Regelgröße einem analogen Regler (nicht gezeigt) oder nach einer Analog-Digital-Wandlung einem digitalen Regler (ebenfalls nicht gezeigt) zugeführt werden. Die verwendbaren Regler und in Frage kommende Reglerstrukturen (P-Regler, PI-Regler, PD-Regler, PID-Regler) sind an sich bekannt und bedürfen hier keiner besonderen Erläuterung. Ein solcher Regler ist Bestandteil der Regelungseinrichtung 16.

Durch die vergleichsweise einfache Beschaltung des Unterdruckschalters 24 mit einem anschließenden Filter, insbesondere Tiefpassfilter 28, lässt sich aus dem Signalverlauf über dem Unterdruckschalter 24 ein begrenztes analoges Sensorsignal 32 generieren, das ein Maß für den Unterdruck im Luftweg des Saugluftstroms ist. Begrenzt ist das erhältliche analoge Sensorsignal 32, weil das beobachtete Prellen des Schaltkontakts des Unterdruckschalters 24 und das damit erzeugte Signalmuster nur in der Umgebung von dessen Schaltpunkt auftreten.

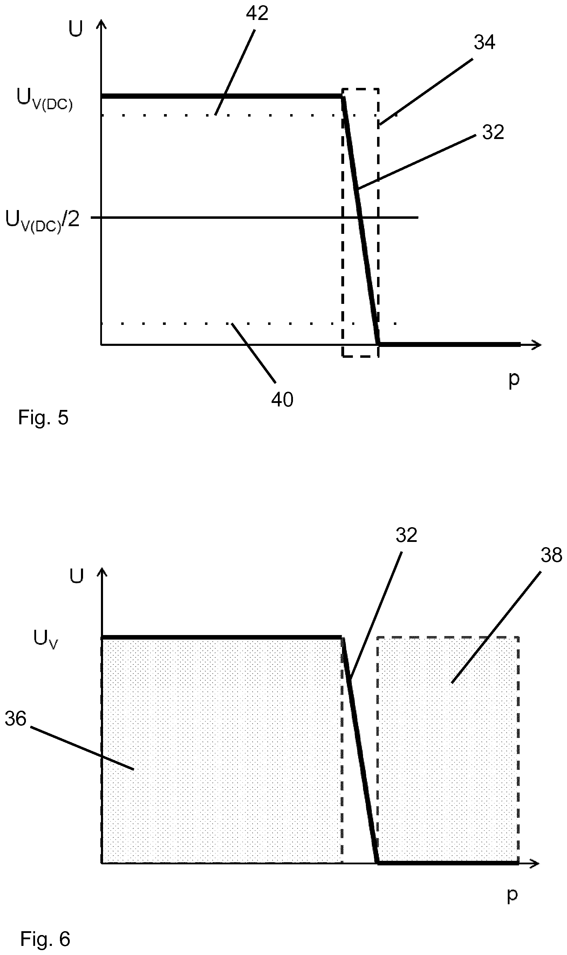

Der Begrenzung des resultierenden Sensorsignals 32 - im Folgenden als begrenzter Messbereich 34 (Figur 5) bezeichnet - steht aber gegenüber, dass der begrenzte Messbereich 34 genau um den Schaltpunkt des Unterdruckschalters 24 liegt. Diesen Bereich kann die Regelungseinrichtung 16 dann aber mit umso besserer Genauigkeit ausregeln. Damit werden aufwendige Auswertungsalgorithmen überflüssig und es ergibt sich die Möglichkeit, einen einfachen Regler einzusetzen, der auf den jeweiligen Messbereich 34 optimiert ist.

Die Darstellung in Figur 5 zeigt die Lage des Messbereichs 34 eines wie in Figur 2 beschalteten Unterdruckschalters 24. Auf der Ordinate ist die Leistung p des Staubsaugergebläses 12 abgetragen. Auf der Abszisse ist die am Ausgang des wie in Figur 2 beschalteten Unterdruckschalters 24 abgreifbare, resultierende Spannung (U_{M}) abgetragen.

Da der Messbereich 34 des Sensors recht schmal ist, kann der jeweilige Regler außerhalb des Messbereichs 34, also in einem ersten Bereich 36 unterhalb des Messbereichs 34 und einem zweiten Bereich 38 oberhalb des Messbereichs 34, zum Beispiel mit einem höheren Verstärkungsfaktor regeln und damit schnell wieder in den Messbereich 34 kommen. Die beiden Bereiche 36, 38 sind in der Darstellung in Figur 6 gezeigt.

Der Regelungseinrichtung 16 und dem davon umfassten Regler wird als Sollwert ein Spannungswert von ½ U_{V(DC)} vorgegeben (siehe Figur 5). Dieser Sollwert liegt im Zentrum des Messbereichs 34. Bei Abweichungen des Sensorsignals 32 von diesem Sollwert kann die Regelungseinrichtung 16 schnell und präzise reagieren. Wenn das Sensorsignal 32 allerdings den Messbereich 34 verlässt, also entweder einen vorgegebenen oder vorgebbaren unteren Schwellwert 40 unterschreitet oder einen vorgegebenen oder vorgebbaren oberen Schwellwert 42 überschreitet, wird in der Regelungseinrichtung 16 ein anderer, höherer Verstärkungsfaktor verwendet. Anstelle eines Reglers, bei dem bei einem Sensorsignal 32 im Messbereich 34 ein erster (geringer) Verstärkungsfaktor und bei einem Sensorsignal 32 außerhalb des Messbereichs 34 ein zweiter (höherer) Verstärkungsfaktor verwendet wird, kommt auch eine Umschaltung zwischen einem ersten Regler und einem zweiten Regler in Betracht. Dann wird bei einem Sensorsignal 32 im Messbereich 34 der erste Regler und bei einem Sensorsignal 32 außerhalb des Messbereichs 34 der zweite Regler aktiviert. Die beiden Regler können eine jeweils unterschiedliche Struktur haben. Zum Beispiel kann als zweiter Regler, der bei einem Sensorsignal 32 außerhalb des Messbereichs 34 aktiviert wird, ein schneller Regler, zum Beispiel ein schneller P-Regler mit einem hohen Verstärkungsfaktor, aktiviert werden. Unabhängig von der konkreten Ausführung der Regelungseinrichtung 16 mit umschaltbaren Reglern oder umschaltbarem Verstärkungsfaktor, ist die Regelungseinrichtung 16 in jedem Fall so ausgeführt, dass bei einem Sensorsignal 32 außerhalb des Messbereichs 34 die Leistung p des Staubsaugergebläses 12 so korrigiert wird, dass sich wieder ein Sensorsignal 32 im Messbereich 34 und zwischen den beiden Schwellwerten 40, 42 ergibt. Bei einem Sensorsignal 32 im Messbereich 34 erfolgt eine Regelung der Leistung p des Staubsaugergebläses 12 so, dass der vorgegebene Sollwert möglichst genau eingehalten wird.

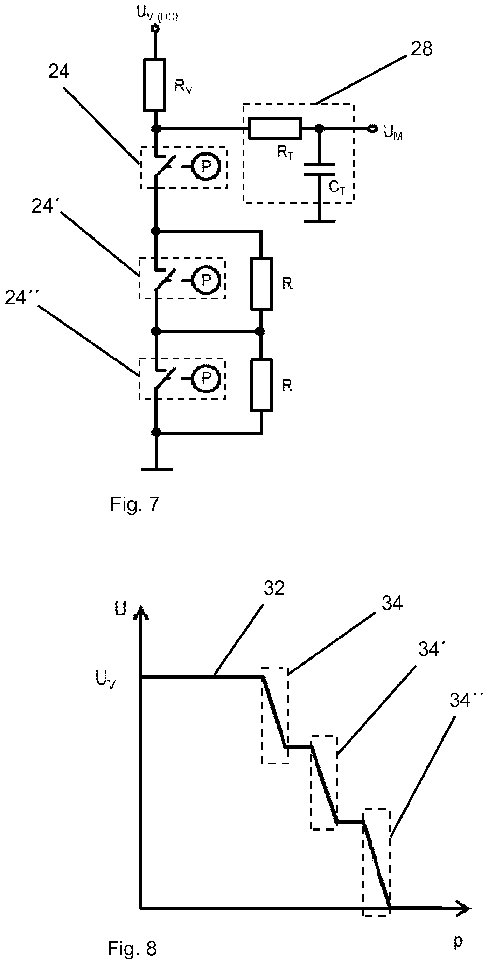

Die Darstellung in Figur 7 zeigt eine sinnvolle Erweiterung des Konzepts gemäß Figur 2. Anstelle eines Unterdruckschalters 24 können auch mehrere Unterdruckschalter, hier drei Unterdruckschalter 24, 24', 24", in einer kaskadierten Anordnung verwendet werden. Jeder Unterdruckschalter 24, 24', 24" hat einen anderen Schaltpunkt, so dass bei einer Verwendung der drei in Figur 7 gezeigten Unterdruckschalter 24, 24', 24" auch drei Messbereiche 34, 34', 34" (Figur 8) resultieren, die bei einer geeigneten Wahl der Schaltpunkte der Unterdruckschalter 24, 24', 24" geeignet aneinander anschließen. In Summe ergibt sich dann ein vergrößerter Messbereich. Eine solche kaskadierte Anordnung mit mehreren Unterdruckschaltern 24, 24', 24" bildet also einen Unterdrucksensor gemäß dem hier vorgeschlagenen Prinzip mit einem vergrößerten Messbereich. Anstelle mehrerer Unterdruckschalter 24, 24', 24" mit jeweils genau einem Schaltpunkt können auch ein oder mehrere Unterdruckschalter zum Einsatz kommen, die jeweils zwei oder mehr Schaltpunkte aufweisen.

Einzelne im Vordergrund stehende Aspekte der hier vorgelegten Beschreibung lassen sich damit kurz wie folgt zusammenfassen: Angegeben werden ein Verfahren zum Einstellen der Leistung eines Staubsaugergebläses 12, eine Regelungseinrichtung 16 zur Umsetzung des Verfahrens und ein Staubsauger 10 mit einer solchen Regelungseinrichtung 16, wobei gemäß dem Verfahren ein über einem Unterdruckschalter 24 mit einem einzigen Schaltpunkt abgreifbares Signal 30 mit einem Filter 28 geglättet wird und das resultierende Signal 32 wie ein Sensorsignal eines analogen Unterdrucksensors von der Regelungseinrichtung 16 zur Einstellung der Gebläseleistung verarbeitet wird.

### Bezugszeichenliste

- 10: Staubsauger
- 12: Staubsaugergebläse
- 14: Gebläsemotor
- 16: Regelungseinrichtung
- 18: Saugschlauch
- 20: Saugstutzen
- 22: Staubbeutel
- 24: Unterdruckschalter
- 26: Unterdruckschlauch
- 28: Filter / Tiefpassfilter
- 30: Signal (Ausgangssignal des Unterdruckschalters)
- 32: Signal / Sensorsignal (Ausgangssignal der Kombination von Unterdruckschalter und (Tiefpass-)Filter)
- 34: Messbereich
- 36: erster Bereich (Bereich unterhalb des Messbereichs)
- 38: zweiter Bereich (Bereich oberhalb des Messbereichs)
- 40: unterer Schwellwert
- 42: oberer Schwellwert

## Patentansprüche

1. Verfahren zum Einstellen der Leistung eines Staubsaugergebläses (12),
bei dem eine elektronische Regelungseinrichtung (16) die Gebläseleistung mittels einer geeigneten Stellgröße in Abhängigkeit eines vom Staubsaugergebläse (12) erzeugten Unterdrucks als Regelgröße einstellt,
wobei ein Maß für den Unterdruck mittels eines Unterdruckschalters (24) mit einem einzigen Schaltpunkt ermittelt wird,
**dadurch gekennzeichnet,**
**dass** ein über dem Unterdruckschalter (24) abgreifbares Signal gefiltert wird, insbesondere tiefpassgefiltert wird, und
**dass** ein nach der Filterung resultierendes Signal (32) ein Istwert als Maß für den Unterdruck und als Regelgröße zur Einstellung der Gebläseleistung verwendet wird, wobei das abgreifbare Signal eine Folge von Impulsen, die beim Prellen des Unterdruckschalters während der Umschaltphase entstehen, aufweist, wobei die Folge von Impulsen für einen vorbestimmten Zeitraum gefiltert werden zur Bestimmung des Istwertes als Maß für den erfassten Unterdruck.

2. Verfahren nach Anspruch 1 wobei der Regelungseinrichtung (16) als Sollwert für die Regelung ein Wert zwischen einem Minimalwert des resultierenden Signals (32) und einem Maximalwert des resultierenden Signals (32) vorgegeben wird, insbesondere ein Wert genau in der Mitte zwischen dem Minimalwert und dem Maximalwert.

3. Verfahren nach Anspruch 2, wobei oberhalb des Minimalwerts des resultierenden Signals (32) und unterhalb des Maximalwerts des resultierenden Signals (32) ein unterer bzw. ein oberer Schwellwert (40, 42) vorgegeben werden und wobei bei einem als Istwert aufgenommenen Momentanwert des Signals (32) zwischen dem unteren und dem oberen Schwellwert (40, 42) ein Regler der Regelungseinrichtung (16) aktiviert wird, der den jeweiligen Istwert in der Nähe des Sollwerts hält und wobei bei einem Istwert unterhalb des unteren Schwellwerts (40) oder oberhalb des oberen Schwellwerts (42) ein Regler der Regelungseinrichtung (16) aktiviert wird, der den Istwert zumindest wieder in einen Bereich zwischen den beiden Schwellwerten (40, 42) führt.

4. Regelungseinrichtung (16) für einen Staubsauger (10) zum Einstellen der Leistung eines Staubsaugergebläses (12) mit einem Unterdruckschalter (24) und einen Tiefpassfilter (28) zur Ausführung eines Verfahrens nach einem der Ansprüche 1 bis 3.

5. Regelungseinrichtung (16) nach Anspruch 4, mit einem Unterdruckschalters (24) mit einem einzigen Schaltpunkt und einem im Anschluss an den Unterdruckschalter (24) und zur Filterung eines über dem Unterdruckschalter (24) abgreifbaren Signals vorgesehenen und elektrisch parallel zu dem Unterdruckschalter (24) geschalteten Filter, insbesondere einem Tiefpassfilter (28).

6. Regelungseinrichtung (16) nach Anspruch 5, mit einem Filter in Form eines durch ein RC-Glied gebildeten Tiefpassfilters (28).

7. Regelungseinrichtung (16) nach einem der Ansprüche 5 oder 6, mit einer Mehrzahl von in Reihe geschalteten Unterdruckschaltern (24, 24', 24") mit jeweils genau einem Schaltpunkt und einem elektrisch parallel zu der Reihenschaltung der Unterdruckschalter (24, 24', 24") angeordneten Filter, insbesondere Tiefpassfilter (28).

## Claims

1. Method for adjusting the power of a vacuum cleaner fan (12), in which an electronic control device (16) adjusts the fan power by means of a suitable manipulated variable on the basis of a vacuum generated by the vacuum cleaner fan (12) as a controlled variable, a measure for the vacuum being determined by means of a vacuum switch (24) having a single switch point, **characterised in that** a signal that can be tapped via the vacuum switch (24) is filtered, in particular low-pass filtered, and **in that** a signal (32) resulting after the filtering an actual value is used as a measure for the vacuum and as a controlled variable for adjusting the fan power, the signal that can be tapped having a sequence of impulses which occur during the switching phase when the vacuum switch bounces, the sequence of impulses being filtered for a predetermined period of time in order to determine the actual value as a measure for the detected vacuum.

2. Method according to claim 1, wherein a value between a minimum value of the resulting signal (32) and a maximum value of the resulting signal (32) is specified for the control device (16) as a target value for the control, in particular a value precisely in between the minimum value and the maximum value.

3. Method according to claim 2, wherein a lower and upper threshold (40, 42) is specified above the minimum value of the resulting signal (32) and below the maximum signal of the resulting signal (32), respectively, and wherein, when a current value of the signal (32) between the lower and the upper threshold (40, 42) is taken as the actual value, a controller of the controller device (16) is activated which keeps the relevant actual value close to the target value, and wherein, if an actual value is below the lower threshold (40) or above the upper threshold (42), a controller of the control device (16) is activated which guides the actual value at least back into a range between the two thresholds (40, 42).

4. Control device (16) for a vacuum cleaner (10) for adjusting the power of a vacuum cleaner fan (12), which device comprises a vacuum switch (24) and a low-pass filter (28) for carrying out a method according to any of claims 1 to 3.

5. Control device (16) according to claim 4, comprising a vacuum switch (24) having a single switch point and a filter, in particular a low-pass filter (28), which is provided downstream of the vacuum switch (24) for filtering a signal that can be tapped via the vacuum switch (24) and which is connected electrically in parallel with the vacuum switch (24).

6. Control device (16) according to claim 5, comprising a filter in the form of a low-pass filter (28) formed by an RC element.

7. Control device (16) according to either claim 5 or claim 6, comprising a plurality of vacuum switches (24, 24', 24") which are connected in series and each have exactly one switch point, and comprising a filter, in particular a low-pass filter (28), arranged electrically in parallel with the series connection of the vacuum switches (24, 24', 24").

## Revendications

1. Procédé de réglage de la puissance d'un ventilateur d'aspirateur (12), dans lequel un dispositif de régulation électronique (16) règle la puissance du ventilateur comme grandeur de régulation au moyen d'une grandeur de réglage appropriée en fonction d'une dépression produite par le ventilateur d'aspirateur (12), dans lequel une mesure de la dépression est déterminée au moyen d'un commutateur de dépression (24) doté d'un point de commutation unique, **caractérisé en ce qu'**un signal pouvant être capté par le commutateur de dépression (24) est filtré, en particulier filtré par un filtre passe-bas, et **en ce qu'**un signal (32) résultant du filtrage, une valeur réelle, est utilisée comme mesure de la dépression et comme grandeur de régulation pour régler la puissance du ventilateur, le signal captable présentant une séquence d'impulsions qui sont produites lorsque le commutateur de dépression rebondit pendant la phase de commutation, la séquence d'impulsions étant filtrée pendant un temps prédéfini afin de déterminer la valeur réelle comme mesure de la dépression détectée.

2. Procédé selon la revendication 1, dans lequel une valeur entre une valeur minimale du signal résultant (32) et une valeur maximale du signal résultant (32), en particulier une valeur située exactement entre la valeur minimale et la valeur maximale, est prédéfinie pour le dispositif de régulation (16) comme valeur de consigne pour la régulation.

3. Procédé selon la revendication 2, dans lequel, au-dessus de la valeur minimale du signal résultant (32) et en dessous de la valeur maximale du signal résultant (32), une valeur de seuil inférieure ou une valeur de seuil supérieure (40, 42) est prédéfinie et, dans lequel, lorsqu'une valeur instantanée du signal (32) entre la valeur de seuil inférieure et la valeur de seuil supérieure (40, 42) est enregistrée comme valeur réelle, un régulateur du dispositif de régulation (16) est activé, lequel régulateur maintient la valeur réelle respective à proximité de la valeur de consigne et, lorsqu'une valeur réelle est inférieure à la valeur de seuil inférieure (40) ou supérieure à la valeur de seuil supérieure (42), un régulateur du dispositif de régulation (16) est activé, lequel régulateur ramène la valeur réelle au moins dans une plage comprise entre les deux valeurs de seuil (40, 42).

4. Dispositif de régulation (16) d'un aspirateur (10) permettant de régler la puissance d'un ventilateur d'aspirateur (12) comportant un commutateur de dépression (24) et un filtre passe-bas (28) pour la mise en œuvre d'un procédé selon l'une des revendications 1 à 3.

5. Dispositif de régulation (16) selon la revendication 4, comportant un commutateur de dépression (24) doté d'un point de commutation unique et d'un filtre, en particulier d'un filtre passe-bas (28), qui est prévu au niveau du commutateur de dépression (24) et conçu pour filtrer un signal pouvant être capté par le commutateur de dépression (24) et qui est relié électriquement en parallèle avec celui-ci.

6. Dispositif de régulation (16) selon la revendication 5, comportant un filtre sous la forme d'un filtre passe-bas (28) formé par un élément RC.

7. Dispositif de régulation (16) selon l'une des revendications 5 ou 6, comportant plusieurs commutateurs de dépression (24, 24', 24") montés en série, dotés chacun exactement d'un point de commutation et d'un filtre, en particulier d'un filtre passe-bas (28), disposé électriquement en parallèle avec le montage en série des commutateurs de dépression (24, 24', 24").
